# EUROPÄISCHE PATENTSCHRIFT

(11) **EP 1 320 691 B1**
(45) Veröffentlichungstag und Bekanntmachung des Hinweises auf die Patenterteilung: **23.03.2005**
(21) Anmeldenummer: 01985285.4
(22) Anmeldetag: 20.09.2001
(51) Int. Cl.: F16C 35/00, F16H 57/02

(54) **MASCHINENGEHÄUSE**
MACHINE HOUSING
BOITIER DE MACHINE

(30) Priorität: 23.09.2000 DE 10047233
(43) Veröffentlichungstag der Anmeldung: 25.06.2003
(73) Patentinhaber: ZF FRIEDRICHSHAFEN Aktiengesellschaft, 88038 Friedrichshafen (DE)
(72) Erfinder: DESCHLER, Arnulf, 88046 Friedrichshafen (DE)
(86) Internationale Anmeldenummer: PCT/EP2001/010868
(87) Internationale Veröffentlichungsnummer: WO 2002/025124

(56) Entgegenhaltungen:
- DE-A- 19 604 886
- GB-A- 2 345 041
- US-A- 3 942 502
- US-A- 4 377 093

## Beschreibung

Die Erfindung betrifft ein Maschinengehäuse nach dem Oberbegriff von Anspruch 1.

Die meisten Maschinengehäuse besitzen Gehäuseteile, die als Lagergehäuse für Wälzlager oder Gleitlager ausgebildet sind. Das Lagergehäuse kann integraler Bestandteil des Maschinengehäuses sein oder als separates Bauteil, z.B. als Lagerdeckel, mit dem Maschinengehäuse verbunden werden. Es verfügt in der Regel über mindestens einen Lagersitz, der über eine Lagergehäusewand an eine Gehäusewand des Maschinengehäuses angeschlossen ist. Unter der Belastung durch axiale und radiale Kräfte verformt sich die Lagergehäusewand und verläuft gegenüber ihrer ursprünglichen Lage mehr oder weniger geneigt. In einem unbelasteten, ursprünglichen Zustand kann die Lagergehäusewand weitgehend eben sein. Um die Formsteifigkeit zu verbessern, Schwingungen entgegenzuwirken oder zu kühlen, wird es häufig auch aus baulichen Gründen oder aus Gründen der Festigkeit schalenförmig ausgebildet und/oder es besitzt Rippen.

Solche Maschinengehäuse werden in vielfältigen Ausführungen in der Technik als Getriebegehäuse, Gehäuse von Antriebsmaschinen, von Bearbeitungsmaschinen usw. sowie für die verschiedensten Anwendungsgebiete eingesetzt. Beispielhaft wird auf das Buch "Zahnradgetriebe", Johannes Loomann, Konstruktionsbücher Band 26, Springer-Verlag Berlin 1970 hingewiesen, in dem auf Seite 220, Abb. 7.23 ein Achsgetriebe dargestellt ist, dessen Gehäuse Lagergehäuse für Kegelrollenlager aufweist, durch die ein Differenzialkäfig in dem Gehäuse des Achsgetriebes gelagert ist. Dabei ist ein Lagergehäuse als Lagerdeckel ausgebildet und verschließt eine Montageöffnung für das Achsgetriebe, während das andere Lagergehäuse integraler Bestandteil des Getriebegehäuses ist.

Das Achsgetriebe ist ein Kegelrad-Differenzialgetriebe für den Hinterachsantrieb eines Personenkraftfahrzeugs, wobei der Differenzialkäfig über ein Kegelritzel angetrieben wird. Das hohe Antriebsmoment am Kegelritzel erzeugt neben axialen Lagerkräften eine große radial gerichtete Lagerkraft, die die Kegelrollenlager beim Zugbetrieb in einem begrenzten Umfangsbereich belasten. Im Schubbetrieb ist die Radialkraft in der Regel wesentlich kleiner und beträgt etwa 30 % der Radialkraft im Zugbetrieb. Die Radialkraft im Schubbetrieb verläuft außerdem zur Radialkraft im Zugbetrieb um einen Winkel γ in Umfangsrichtung versetzt, der häufig ungefähr 90° groß ist. Auf Grund der geometrischen Verhältnisse der Kegelrollenlager entstehen durch die radiale Belastungen neben den axialen Lagerkräften, die der Kegeltrieb erzeugt, zusätzliche axiale Kräfte, die auf den Umfangsbereich wirken, in dem sich die radiale Belastung abstützt, so dass sich insgesamt eine exzentrische axiale Lagerbelastung ergibt, die eine asymmetrische Verformung der Lagergehäusewand zur Folge hat. Diese wird von Verformungen überlagert, die sich auf Grund unregelmäßiger Elastizitäten der Lagergehäusewand und der angrenzenden Wand des Maschinengehäuses ergeben.

Strukturen des Lagergehäuses, die nicht optimal hinsichtlich ihrer Steifigkeit gestaltet sind, weisen unter Last in Folge der elastischen Verformungen eine relativ große Verschiebung und ein Kippen des Lagersitzes auf. Die dadurch entstehenden Nachteile sind vielschichtig. Im Getriebebau und überall dort, wo Verzahnungen zum Einsatz kommen, beeinflussen Verschiebungen an den Lagersitzen den Zahneingriff. Flankenlinienabweichungen in den Zahneingriffsstellen sind die Folge und führen dort zu Festigkeitsproblem und zu Geräuschen. Um diesen Problemen entgegenzuwirken, haben die meisten Verzahnungen eine Flankenlinienkorrektur. Diese kann aber nur für einen Betriebszustand optimal sein. Da dies aus Festigkeitsgründen meist der Vollastbereich ist, auf den hin korrigiert wird, treten in den überwiegend genutzten Teillastbereichen starke Geräusche auf. Diese Problematik gilt insbesondere bei Kegeltrieben am Ende eines Antriebsstrangs. Es treten dort hohe Momente auf und dies insbesondere an Verzahnungen, die bezüglich einer Verlagerung empfindlich sind. Dies ist in Getrieben bei frontgetriebenen Fahrzeugen mit längs eingebautem Frontmotor bzw. bei heckgetriebenen Fahrzeugen mit längs eingebautem Heckmotor und allradgetriebenen Fahrzeugen sowie auch in angetriebenen Achsen der Fall.

Es treten aber nicht nur Probleme in den Verzahnungen auf, sondern auch die Lager selbst versagen früher, wenn es zu großen Verschiebungen kommt. Das Kippen von Innenring und Außenring des Lagers sowie das axiale Aufweiten der Lagersitze bei Kegelrollenlager führen zu kleineren Lastzonen und damit zu höheren Pressungen in den Lagern. Mit kleiner werdender Lastzone wirken die Axialkräfte mit zunehmender Exzentrizität, wodurch der Effekt des Kippens verstärkt wird, so dass mit zunehmender Verformung des Lagergehäuses die geometrischen Belastungsbedingungen ungünstiger werden.

Durch eine größere Formsteifigkeit des Lagergehäuses könnte das Verformen, Verlagern und Kippen des Lagersitzes geringer gehalten werden, jedoch führt eine größere Steifigkeit in der Regel zu einem höheren Gewicht, da die steifste Lösung dann erreicht ist, wenn der gesamte zur Verfügung stehende Bauraum mit tragendem Material ausgefüllt ist. Dies bedeutet dann allerdings auch die schwerste Lösung, die vor allem im Fahrzeugbereich nicht akzeptabel und keineswegs fertigungsgerecht ist.

Bei den meisten bekannten Lösungen wird ein großer Anteil des eingesetzten Materials in den Wandungen des Lagergehäuses verbaut. Weiterhin sind Versteifungs- und Verstärkungsrippen oft traditionell radial zur Lagerachse ausgerichtet und um den Lagersitz herum angeordnet. Die Rippen erhöhen vor allem das Widerstandsmoment der Lagergehäusewand und sie werden wie diese insbesondere auf Biegung beansprucht.

Der Erfindung liegt die Aufgabe zugrunde, das Lagergehäuse eines gattungsgemäßen Maschinengehäuses bezüglich des Materialeinsatzes und der Steifigkeit zu optimieren. Sie wird gemäß der Erfindung durch die Merkmale des Anspruchs 1 gelöst. Weitere Ausgestaltungen ergeben sich aus den Unteransprüchen.

Nach der Erfindung weist die Lagergehäusewand mindestens eine ringförmige, den Lagersitz mindestens teilweise umfassende Umfangsrippe in einem Bereich auf, dessen Neigung gegenüber seinem Ausgangszustand sich ohne Umfangsrippe unter Belastung am meisten ändern würde und dass mehrere weitere Rippen quer zur Umfangsrippe verlaufen.

Bei einer axialen Belastung und einer entsprechenden Verformung der Lagergehäusewand kippt die Umfangsrippe nach außen, wobei das freie Ende der Umfangsrippe den größten Weg beschreibt und entsprechende Zugspannungen in Umfangsrichtung aufbaut, die der Verformung entgegen wirken. Die Zugspannungen steigen um so steiler an, je mehr sich die Umfangsrippe gegenüber ihrer Ausgangslage neigt. Es ist daher vorteilhaft, die Umfangsrippe im Bereich der Lagergehäusewand anzuordnen, dessen Neigungswinkel ohne Umfangsrippe sich am meisten unter Belastung ändern würde. Damit der Winkel, den die Umfangsrippe mit der Lagergehäusewand einschließt, weitgehend auch unter der Belastung erhalten bleibt und so eine möglichst große Dehnung erreicht wird, sind in geeigneten Abständen voneinander weitere Rippen vorgesehen, die quer zur Umfangsrippe verlaufen und an diese angeschlossen sind.

Die Umfangsrippe oder mehrere im Wesentlichen konzentrisch zu einander verlaufende Umfangsrippen, sind ringförmig in Längsrichtung in sich oder über einen Lagerbund geschlossen, um die Zugspannungen gut aufnehmen zu können. Sie umschliessen den hoch belasteten Bereich des Lagers bzw. des Lagersitzes gleichsam wie ein Spannband, wobei sie zweckmäßigerweise in dem Bereich, der dem Bereich mit der maximalen Neigungsänderung der Lagergehäusewand diametral zur Lagerachse gegenüber liegt, nahe an dem Lagerbund verlaufen oder an diesem angeschlossen sind. Durch die relativ kurze Umfangsrippe wird der Materialeinsatz gering gehalten, da der Spannungsaufbau zwar von der Neigungsänderung und der Rippenhöhe, nicht aber von der Länge der Umfangsrippe positiv beeinflusst werden. Da auf Grund der geometrischen Verhältnisse die Zugspannungen in Umfangsrichtung mit der Verformung sehr steil ansteigen, wirkt sich die Umfangsrippe in diesem Bereich sehr günstig auf die Formsteifigkeit aus.

Die Umfangsrippe besitzt zweckmäßigerweise einen im Wesentlichen elliptischen Verlauf. Prinzipiell können die elliptischen Teilstücke der Umfangsrippen zwischen den quer verlaufenden Rippen durch gerade Teilstücke ersetzt werden, wodurch sich eine steifere Struktur ergeben kann. Bei einer engmaschigen Anbindung durch die quer verlaufenden Rippen, ist der Effekt allerdings gering. Ferner sitzen die elliptisch gekrümmten Rippen radial weiter außen als die begradigten Rippen, so dass die gekrümmten Rippen stärker gedehnt werden, da die Krümmung der Biegelinien nach außen hin zunimmt. Schließlich haben die Umfangsrippen den Vorteil, dass sie den gering belasteten Bereich, der der Lastzone diametral zur Lagerachse gegenüberliegt, mehr zum Tragen der Last einbinden.

Gemäß einer Ausgestaltung der Erfindung ist die Lagergehäusewand durch eine radial gerichtete Hauptlast belastet und schalenförmig ausgebildet, wobei sie im Bereich der axialen und radialen Hauptlast im Längsschnitt stärker gekrümmt verläuft als in dem Bereich, der zur Lagerachse diametral liegt.

Hierbei geht man von der Überlegung aus, dass zunächst der Bereich des Lagergehäuses, der die Lastzone einschließt, von dem diametral zur Lagerachse gelegenen Bereich des Lagergehäuses unterschieden wird. Der Bereich der Lastzone trägt den größeren Anteil der Belastung. Der Grund hierfür ist, dass die Kraft von der Welle ausschließlich über die Kontaktstellen im Lager und vom Lageraußenring über den Lagersitz auf das Lagergehäuse eingeleitet wird. Es werden somit nur Druckkräfte auf die Lastzone ausgeübt, während der diametral gegenüberliegende Bereich im Wesentlichen diejenige Belastung aufnehmen muss, die von der Lastzone ausgehend um den Lagersitz herum geleitet wird. Der zweite Grund, die Bereiche des Lagergehäuses unterschiedlich zu gestalten, ist die Verformungscharakteristik und die damit in Verbindung stehenden Grundsätze der technischen Mechanik.

Durch eine stärkere Krümmung der Lagergehäusewand in der Lastzone wird der Lagersitz unter der kombinierten axialen und radialen Belastung so geführt, dass der Lageraußenring weniger stark verkippt. Ferner wird die Lagergehäusewand mehr in einen zur Lagerebene parallelen Bereich und einen Bereich unterteilt, der dazu senkrecht verläuft. Während der erste Bereich durch die axialen Kräfte stark auf Biegung beansprucht wird und damit zum Kippen des äußeren Lagerrings beiträgt, ist der zweite Bereich formstabil. Auf den ersten Bereich und den Übergangsbereich zum zweiten Bereich können nun Gestaltungsmerkmale nach dem ersten und zweiten Anspruch angewendet werden.

Bei einer solchen Gestaltung wandert der Lagermittelpunkt unter Belastung in Richtung der Last und der Anschlussfläche bzw. des Flansches des Lagergehäuses, und zwar verlagert er sich bei einem gleichen radialen Offset im Falle der erfindungsgemäßen Struktur weiter nach innen als bei einer rotationssymmetrischen Struktur des Lagergehäuses. Mit zunehmender radialer Belastung konzentriert sich die Kraftübertragung auf eine kleinere Lastzone, so dass bei einer Extremwertbetrachtung die Lastzone zu einem Lastpunkt verkümmert. In diesem Zustand wirkt die gesamte Axialkraft auf die Lastzone ganz außen am Lageraußenring und erreicht damit die maximale Exzentrizität ihrer resultierenden Wirkungslinie. Allerdings würde auch die axiale Lage der Welle an diesem Punkt fixiert werden. Während bei einer rotationssymmetrischen Struktur die Lastzone nach außen ausweicht, wandert bei der erfindungsgemäßen Lösung die Lastzone nach innen, so dass dieser Vorspannungseffekt der realen, durch Elastizitäten verursachten, ungünstigen axialen Verlagerungen entgegenwirkt.

Nach der Erfindung ist auf der konvexen Seite der Lagergehäusewand, insbesondere im äußeren Bereich des Teilstücks, das im Wesentlichen parallel zur Lagerebene verläuft, oder im angrenzenden Teilstück je nach dem, welcher Bereich seine Neigung am meisten ändert, mindestens eine Umfangsrippe angeordnet, zu denen weitere Rippen im wesentlichen quer zur Umfangsrippe verlaufen. In Verbindung mit den quer verlaufenden Rippen werden in den Umfangsrippen Zugspannungen in Umgfangsrichtung aufgebaut, die versteifend auf die Struktur wirken. Durch die Verformung werden die Umfangsrippen über ihre gesamte Länge nach außen gezogen, wodurch sie gedehnt werden und sich somit Zugspannungen in Umfangsrichtung aufbauen können, die gleichsam wie ein Spannband den hoch belasteten Bereich des Lagers und Lagersitzes umschließen. Die wirksamste Position für die Umfangsrippe ist der äußere Bereich des zur Lagerebene parallelen Teilstücks, da hier einmal durch die Elastizität die Anstellung des steilen Wandbereichs zum Tragen kommt, sowie auch die Winkeländerung des zur Lagerebene parallelen Bereichs. Beide Anteile addieren sich und bewirken ein Aufweiten der Umfangsrippe, so dass auch schon bei kleinen Verschiebungen früh eine stabilisierende Zugspannung in Umfangsrichtung aufgebaut wird. Früh zu großräumigen stabilisierenden Spannungen zu kommen, ist für das steifigkeitsoptimierte Lagergehäuse wichtig.

Während die Lagergehäusewand u.a. die Gehäusefunktion des Lagergehäuses gewährleistet, die innen liegenden Bauteile aufzunehmen und nach außen zu schützen, ergänzen die Rippen nicht nur den optimierten Wandverlauf, sondern sie sind fester, auf die Wand abgestimmter Bestandteil der Struktur, die dem zur Lagerebene parallelen Bereich im Bereich der Lastzone eine hohe Biegesteifigkeit verleiht. Die Umfangsrippe reagiert auf die Verformung der Lagergehäusewand mit einem steilen Anstieg der Zugspannung und wirkt somit der Verformung entgegen.

Die erfindungsgemäßen Lagergehäuse können beispielsweise besonders vorteilhaft in Verbindung mit hoch belasteten Achsgetrieben angewendet werden, die am Ende eines Antriebsstrangs hohe Drehmomente übertragen und in der Regel ein Kegelrad-Differenzialgetriebe aufweisen.

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Längsschnitt durch ein erfindungsgemäßes Lagergehäuse mit einer ebenen Lagergehäusewand,

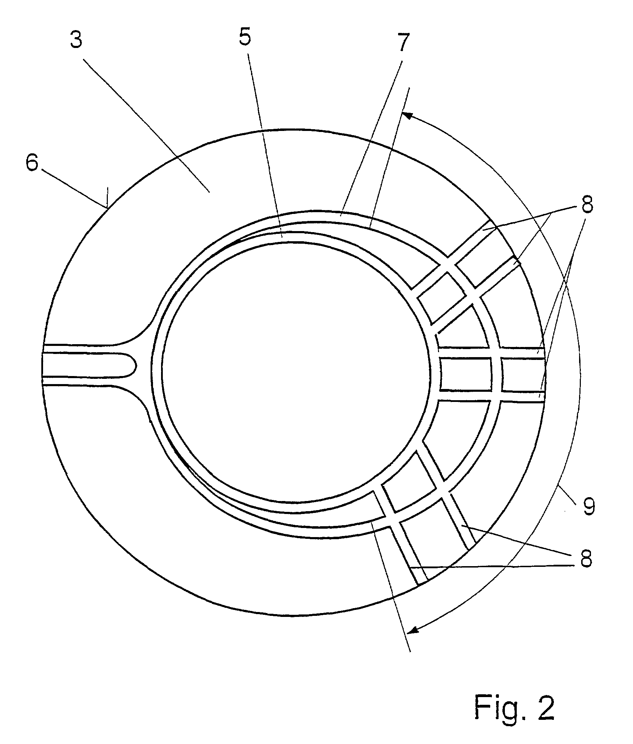

- Fig. 2: eine Ansicht von oben auf ein Lagergehäuse nach Fig. 1,
- Fig. 3: einen schematischen Längsschnitt durch ein erfindungsgemäßes schalenförmig ausgebildetes Lagergehäuse ohne Rippen als Lagerdeckel,
- Fig. 4: eine schematische Skizze einer Verformung eines Lagersitzes eines Kegelrollenlagers in einem Lagergehäuse nach Fig. 3 unter Einwirkung einer radialen Last,
- Fig. 5: eine schematische Skizze der Verformung nach Fig. 4 im Vergleich zu einer Verformung eines rotationssymmetrisch aufgebauten Lagergehäuses und
- Fig. 6: eine perspektivische Ansicht eines Lagergehäuses nach Fig. 3 mit Rippen.

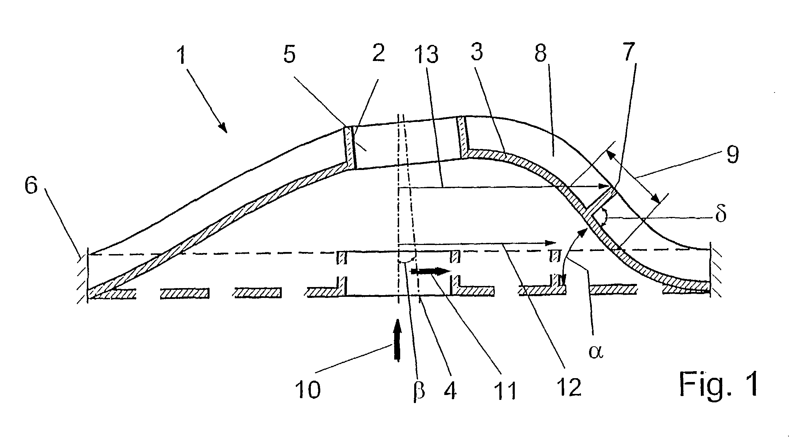

Das in Fig. 1 dargestellte Lagergehäuse 1 ist im unbelasteten Zustand mit unterbrochenen Linien gezeichnet, während die Darstellung mit durchgezogenen Linien die Verformung des Lagergehäuses 1 im übertriebenen Maße unter Belastung durch axiale Kräfte 10 und eine radiale Hauptlast 11 wiedergibt. Das Lagergehäuse 1 besitzt eine Lagergehäusewand 3, die an ihrem äußeren Rand in eine nicht näher dargestellte Wand eines Maschinengehäuses übergeht. Die Übergangsfläche ist mit 6 gekennzeichnet. Die Lagergehäusewand 3, die im unbelasteten Ausgangszustand im Wesentlichen eben ist, trägt konzentrisch zu einer Lagerachse 4 einen Lagerbund 5, der einen Lagersitz 2 zur Aufnahme eines nicht näher dargestellten Wellenlagers aufweist, z.B. eines Kegelrollenlagers.

Unter der Belastung 10, 11 und auf Grund der Anbindung der Lagergehäusewand 3 an die Wand des Maschinengehäuses verformt sich die Lagergehäusewand 3 in ihren Bereichen unterschiedlich, so dass sie Bereiche aufweist, die unter Belastung einen unterschiedlichen Neigungswinkel α zur Ausgangslage haben. Gleichzeitig kippt der Lagersitz 2, wodurch sich die Lagerachse 4 gegenüber ihrer Ausgangslage ebenfalls um einen entsprechenden Winkel β neigt und ein Stück in Richtung der Hauptlast 11 verlagert. In einem Bereich 9, in dem sich der Neigungswinkel α der Lagergehäusewand 3 am meisten ändert, ist eine Umfangsrippe 7 angeordnet. Durch die Verformung der Lagergehäusewand 3 wird die Umfangsrippe 7 von einem Ausgangsabstand 12 von der Lagerachse 4 auf einen größeren Abstand 13 gezwungen, wobei sich Zugspannungen in Umfangsrichtung der Umfangsrippe 7 aufbauen. Diese wirken der Verformung der Lagergehäusewand 3 entgegen und führen zu einer hohen Formsteifigkeit, insbesondere wenn der Anstieg der Zugspannungen steil ist, d.h. wenn der Zugspannungsgradient über der Verformung groß ist.

Dies wird bei der erfindungsgemäßen Anordnung dadurch erreicht, dass die Umfangsrippe 7 auf Grund der großen Änderung des Neigungswinkels α stark nach außen kippt und dabei insbesondere im Bereich ihres freien Endes große Zugspannungen erzeugt. Ihre Größe ist außer von der Änderung des Neigungswinkels α zusätzlich von der Höhe der Umfangsrippe 7 abhängig. Damit die Umfangsrippe 7 unter dem Einfluss der Zugspannungen ihren Winkel δ zur Lagergehäusewand 3 nicht verändert, sind weitere Rippen 8 vorgesehen, die quer zur Umfangsrippe 7 verlaufen und ein Ausweichen der Umfangsrippe 7 nach innen verhindern.

Die Umfangsrippe 7 ist vor allem in dem Bereich wirksam, der am meisten belastet ist und sich daher am meisten verformt. In dem diametral zur Lagerachse 4 liegenden Bereich, der geringer und im Wesentlichen auf Zug belastet ist, kann auf eine Umfangsrippe 7 weitgehend verzichtet werden. Hier ist es lediglich zweckmäßig, dass die Umfangsrippe 7 eine geschlossene Ringstruktur besitzt, um diesen Bereich zum Tragen mit heranzuziehen. Dazu verläuft die Umfangsrippe 7 in diesem Bereich nahe dem Lagerbund 5 oder ist an diesen angeschlossen, so dass er einen Teil der Ringstruktur bildet. Durch die Kürze der Umfangsrippe 7 kann ein geringer Materialeinsatz bei großer Formstabilität erzielt werden.

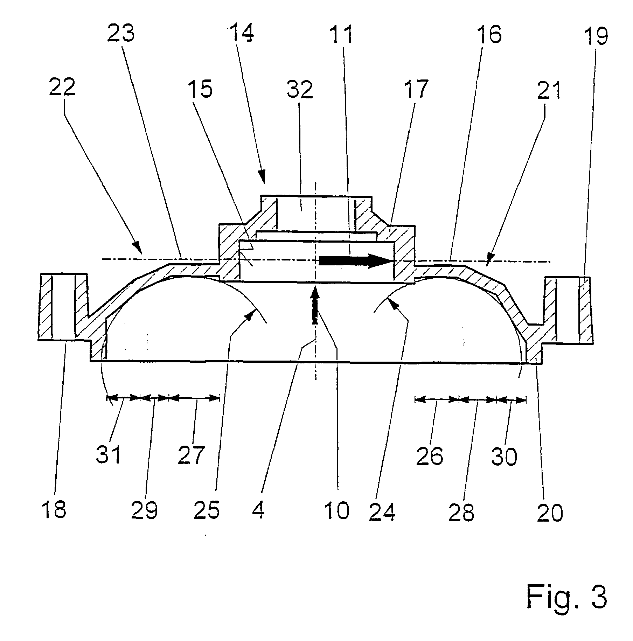

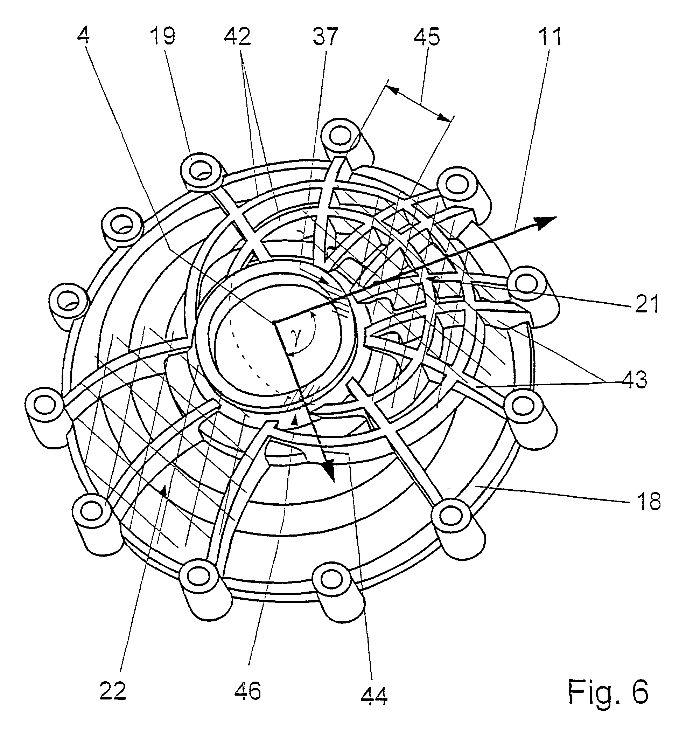

In Fig. 3 und 6 ist ein Lagergehäuse 14 in Form eines Lagerdeckels dargestellt, der mittels eines Zentrierbunds 20 in einem nicht näher dargestellten Maschinengehäuse, z.B. im Gehäuse eines Fahrzeuggetriebes mit einem Kegelraddifferenzialgetriebe, zentriert ist und mit einem Flansch 18 über Schraubenbutzen 19 verschraubt ist, so dass der Lagerdeckel 14 mit seinem Flansch 18 an einer entsprechenden Anlagefläche des Maschinengehäuses anliegt. Grundsätzlich ist es auch möglich, dass das Lagergehäuse 14 wie das Lagergehäuse 1 integraler Bestandteil des Maschinengehäuses ist, in dem die Lagergehäusewand 16 im Bereich des Flansches 18 in eine Gehäusewand des Maschinengehäuses übergeht.

Das Lagergehäuse 14 hat einen Lagersitz 15 zur Aufnahme eines Lagers, z.B. eines Kegelrollenlagers, zur Lagerung eines Differenzialkäfigs. Eine mittlere Lagerebene, in der Radialkräfte als Hauptlast 11 bei Zugbetrieb und als kleinere Last 44 bei Schubbetrieb(Fig. 6) über den äußeren Lagerring 33 des Lagers auf den Lagersitz 15 und die Lagergehäusewand 16 wirken, ist mit 23 bezeichnet, während die Lagerachse die Kennziffer 4 trägt.

Das Lagergehäuse 14 weist einen im Wesentlichen zur Lagerachse 4 rotationssymmetrischen Lagerbund 17 auf, der den Lagersitz 15 umfasst und eine Bohrung 32 für eine Welle besitzt. Ausgehend von dem rotationssymmetrischen Lagerbund 17 verläuft die Lagergehäusewand 16 schalenförmig zum Flansch 18, wobei sie in einem Bereich 21 auf der Seite der Hauptlast 11 eine stärkere Krümmung 24 aufweist, als in einem Bereich 22, der in Bezug auf die Lagerachse 4 diametral zum Bereich 21 liegt und eine geringere Krümmung 25 aufweist. Die Krümmungen 24 und 25 der Lagergehäusewand 16 können aus mehreren abgeflachten Teilstücken 26, 28, 30 bzw. 27, 29, 31 zusammengesetzt sein, wobei die an den Lagerbund 17 anschließenden Teilstücke 26 bzw. 27 im Wesentlichen parallel zur Lagerebene 23 verlaufen, während das Teilstück 30 im belasteten Bereich 21, das an den Flansch 18 angrenzt, einen großen Winkel mit der Lagerebene 23 einschließt, so dass er sich unter Berücksichtigung von notwendigen Gussschrägen einem rechten Winkel nähert, während das entsprechende Teilstück 31 im gering belasteten Bereich 22 einen flachen Winkel zur Lagerebene 23 aufweist, so dass die Teilstücke 27, 29, 31 möglichst geradlinig den Flansch 18 mit dem Lagerbund 17 verbinden. Die Teilstücke 28 bzw. 29 zwischen den Teilstücken 26 und 30 bzw. 27 und 31 bilden einen Übergang zu den angrenzenden Teilstücken 26, 30 bzw. 27, 31.

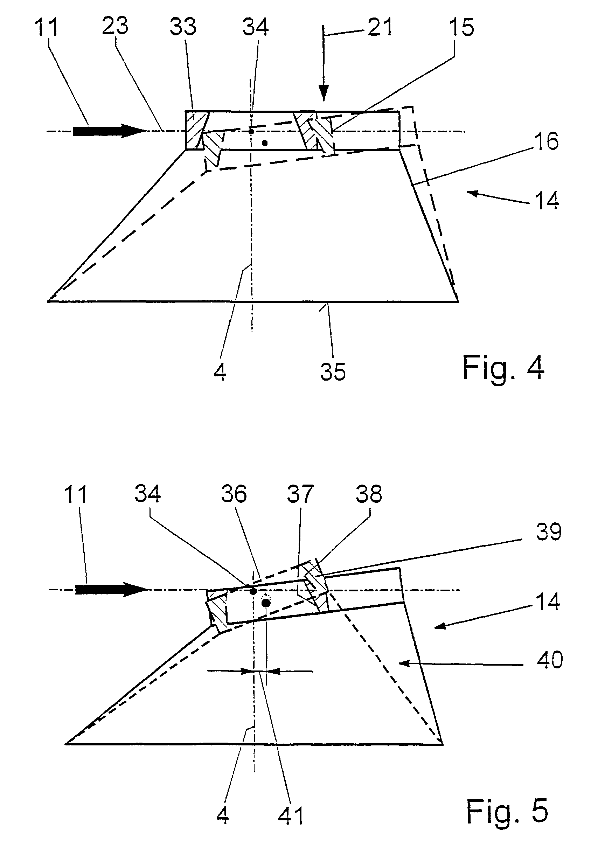

In den schematischen Skizzen nach Fig. 4 und 5 wurde das komplexe dreidimensionale Strukturproblem auf eine zweidimensionale Darstellung vereinfacht. Ferner wurde angenommen, dass die Strukturelemente starr sind und über Gelenke miteinander verbunden sind. Diese stark vereinfachten theoretischen Betrachtungen ohne Elastizität können den prinzipiellen Unterschied gut veranschaulichen. Wird der in den Lagersitz 15 (Fig. 3) eingesetzte äußere Lagerring 33 eines Kegelrollenlagers durch eine radiale Hauptlast 11 belastet, verformt sich das Lagergehäuse 14 und seine Lagergehäusewand 16 weicht gegenüber der Hauptlast 11 zurück. Dabei kippt der Lagersitz 15 mit dem äußeren Lagerring 33 und der Lagermittelpunkt 34 verlagert sich tiefer in das Lagergehäuse 14 zur Flanschebene 35 hin, wobei er sich um einen radialen Offset 41 in Richtung der Hauptlast 11 verlagert (Fig. 5). In Fig. 4 ist die neue Lage der durch die Belastung verformten Lagergehäusewand 16 und des Lagerrings 33 mit dem zugehörigen Lagermittelpunkt 34 gestrichelt eingezeichnet.

Im Vergleich zu dem verformten erfindungsgemäßen Lagergehäuse 14, das in Fig. 5 mit durchgezogenen Linien dargestellt ist, ist ein verformtes rotationssymmetrisch aufgebautes Lagergehäuse 40 mit einer gestrichelten Lagergehäusewand eingezeichnet. Fig. 5 macht deutlich, dass bei gleichem radialem Offset 41 der Lagermittelpunkte 34, 36 der Lagerring 39 im rotationssymmetrisch aufgebauten Lagergehäuse 40 auf Grund der Gestaltung der Lagergehäusewand stärker kippt, als der Lagerring 33 bei dem erfindungsgemäß gestalteten Lagergehäuse 14. Der Lagermittelpunkt 36 verlagert sich zum einen etwas geringer zum Inneren des Lagergehäuses 40 als der Lagermittelpunkt 34 bei dem erfindungsgemäßen Lagergehäuse 14. Vor allem aber wandert der Lastbereich 38 des Lagerrings 39 nach außen, während sich der Lastbereich 37 bei der erfindungsgemäßen Gestaltung des Lagerrings 37 nach innen verlagert und so die ursprüngliche Lage der gelagerten, nicht näher dargestellten Welle stabilisiert.

Die Überlegungen gehen von starren Strukturelementen aus, d.h. von Strukturelementen, die eine hohe Formsteifigkeit besitzen. Dies ist bei flacheren Strukturelementen der Fall, die nur wenig und/oder auf Zug beansprucht sind, z.B. in dem Bereich 22 und in dem Bereich 21 das Teilstück 30. Die Formsteifigkeit wird im übrigen zweckmäßigerweise durch mindestens eine Umfangsrippe 42 und dazu quer verlaufende Rippen 43 erhöht. Die Umfangsrippe 42, die in einem Bereich der Lagergehäusewand 16 liegt, dessen Neigung α bei Belastung sich zur Ausgangslage am meisten ändern würde, umschließt zumindest teilweise den Lastbereich 37 am Lagersitz 15, durch den die Hauptlast 11 geht. Sie ist zum Bereich 22 hin an den Lagerbund 17 angeschlossen, so dass sich eine geschlossene Ringstruktur ergibt.

Die Umfangsrippen 42 weisen einen elliptischen Verlauf auf. Dabei können Teilstücke 45 zwischen den quer verlaufenden Rippen 43 auch abgeflacht oder gerade verlaufen. Es können ferner ein oder mehrere Umfangsrippen 42 vorgesehen werden, wobei mindestens eine der Umfangsrippen 42 bis in den äußeren Bereich des Teilstücks 26 der Lagergehäusewand 16 reicht, das im Bereich 21 der Hauptlast 11 im wesentlichen parallel zur Lagerebene 23 verläuft. Dieses Teilstück 26 sowie das angrenzende Teilstück 28 zu dem Teilstück 30 hin sind vor allem auf Biegung beansprucht und bedürfen deshalb einer besonders großen Formsteifigkeit. Die Bereiche 21 und 22 sind durch eine gekreuzte Schraffur angedeutet. Sie sind nicht klar abgegrenzt sondern gehen fließend ineinander über. Die Rippen 43 werden zweckmäßigerweise bei einem als Lagerdeckel ausgebildeten Lagergehäuse 14 an die Schraubenbutzen 19 angebunden, so dass die Kräfte gut in das Maschinengehäuse eingeleitet werden.

Unter der Hauptlast 11 und den äußeren und induzierten axialen Kräften werden in den Umfangsrippen 42 Zugspannungen in Umfangsrichtung aufgebaut, die äußerst versteifend auf die Struktur des Lagergehäuses 14 wirken. Die Umfangsrippen 42 werden dabei über ihre gesamte Länge nach außen gezogen. Dies bedeutet, dass die Umfangsrippen 42 gedehnt werden und somit durch die Zugspannungen in Umfangsrichtung den ganzen Bereich zusammenhalten. Schon bei kleinen Verschiebungen werden stabilisierende Zugspannungen in Umfangsrichtung aufgebaut, die einer weiteren Verformung entgegenwirken.

Die in Fig. 6 eingezeichnete Hauptlast 11 stellt die radiale Belastung des Lagerdeckels 14 im Zugbetrieb eines Fahrzeugs dar, während im Schubbetrieb eine kleinere radiale Last 44 wirkt, die mit der Hauptlast 11 einen Winkel γ einschließt, der in der Regel etwa 90° beträgt. Der Bereich der Belastung am Lagersitz 15 durch die kleinere Last 44 ist mit 46 gekennzeichnet. Um einer Belastung des Lagerdeckels 14 im Schubbetrieb Rechnung zu tragen, ist es zweckmäßig, die Umfangsrippen 42 und die quer verlaufenden Rippen 43 in einem solchen Belastungsfall so zu gestalten, dass sie die Neigungsänderung der Lagergehäusewand 16 auch unter der Belastung 44 berücksichtigen.

Die erfindungsgemäßen Maßnahmen sind nicht nur sinnvoll für die Gestaltung eines Lagergehäuses 16 bei einem Achsgetriebe, sondern sie können in gleicher Weise vorteilhaft für Lagergehäuse 16 mit ähnlichen Belastungsverhältnissen angewendet werden.

### Bezugszeichen

- 1: Lagergehäuse
- 2: Lagersitz
- 3: Lagergehäusewand
- 4: Lagerachse
- 5: Lagerbund
- 6: Anschlussfläche
- 7: Umfangsrippe
- 8: quer verlaufende Rippe
- 9: Bereich
- 10: axiale Belastung
- 11: radiale Belastung
- 12: Ausgangsabstand
- 13: Abstand bei Verformung
- 14: Lagergehäuse
- 15: Lagersitz
- 16: Lagergehäusewand
- 17: Lagerbund
- 18: Flansch
- 19: Schraubenbutzen
- 20: Zentrierbund
- 21: Bereich der Hauptlast
- 22: diametraler Bereich
- 23: Lagerebene
- 24: stärkere Krümmung
- 25: schwächere Krümmung
- 26: Teilstück
- 27: Teilstück
- 28: Teilstück
- 29: Teilstück
- 30: Teilstück
- 31: Teilstück
- 32: Bohrung
- 33: äußerer Lagerring
- 34: Lagermittelpunkt
- 35: Flanschebene
- 36: Lagermittelpunkt
- 37: Lastbereich
- 38: Lastbereich
- 39: Äußerer Lagering
- 40: Lagergehäuse
- 41: Offset
- 42: Umfangsrippe
- 43: quer verlaufende Rippe
- 44: radiale Last im Schub
- 45: Bereich
- 46: Bereich
- α: Neigungswinkel
- β: Kippwinkel
- δ: Winkel (Umfangsrippe)
- γ: Winkel

## Patentansprüche

1. Maschinengehäuse mit einem Lagergehäuse (1, 14), dessen Lagersitz (2, 15) über eine mit Rippen (7, 8, 42, 43) versehene Lagergehäusewand (3, 16) an eine Gehäusewand des Maschinengehäuses angeschlossen ist und durch axial und radial gerichtete Kräfte (10, 11) belastet ist, **dadurch gekennzeichnet, dass** die Lagergehäusewand (3, 16) mindestens eine ringförmige, den Lagersitz (2, 15) mindestens teilweise umfassende Umfangsrippe (7, 42) in einem Bereich (9, 21) aufweist, dessen Neigung (α) gegenüber seinem Ausgangszustand sich ohne Umfangsrippe (7, 42) unter im Betrieb auftretender Hauptbelastung (10, 11) am meisten ändern würde und in einem Bereich, der dem Bereich (9, 21) mit der größten Neigungsänderung (α) diametral zur Rotationsachse (4) gegenüberliegt, nahe an einem Lagerbund (5, 17), der den Lagersitz (2, 15) umgibt, liegt oder an diesen anschließt und dass mehrere weitere Rippen (18) quer zur Umfangsrippe (7, 42) verlaufen.

2. Maschinengehäuse nach Anspruch 1, **dadurch gekennzeichnet, dass** die Umfangsrippe (7, 42) bzw. ihre Teilstücke (45) im Wesentlichen elliptisch verlaufen.

3. Maschinengehäuse nach Anspruch 2, **dadurch gekennzeichnet, dass** die Umfangsrippe (7, 42) aus einer Vielzahl von Teilstücken (45) besteht, die zwischen den quer verlaufenden Rippen (8, 43) gerade sind.

4. Maschinengehäuse nach einem der vorhergehenden Ansprüche, **dadurch gekennzeichnet, dass** die Lagergehäusewand (16) durch eine radial gerichtete Hauptlast (11) belastet und schalenförmig ausgebildet ist, wobei sie ohne Last im Bereich (21) der axialen und radialen Hauptlast (11) im Längsschnitt stärker gekrümmt verläuft als in dem Bereich (22), der zur Lagerachse (4) diametral liegt.

5. Maschinengehäuse nach Anspruch 4, **dadurch gekennzeichnet, dass** die Umfangsrippe (42) bis an die äußere Grenze eines Teilstücks (26) der Lagergehäusewand (16) reicht, das im Wesentlichen parallel zur Lagerebene (23) verläuft.

6. Maschinengehäuse nach einem der vorhergehenden Ansprüche, **dadurch gekennzeichnet, dass** das Lagergehäuse (14) ein am Maschinengehäuse angeschraubter Lagerdeckel ist, wobei die quer verlaufenden Rippen (43) an Schraubenbutzen (19) angeschlossen sind.

7. Maschinengehäuse nach einem der vorhergehenden Ansprüche, wobei das Lagergehäuse (14) zeitversetzt zur radialen Hauptlast (11) durch eine kleinere radiale Last (44) belastet wird, die mit der Hauptlast (11) einen Winkel (γ) einschließt, **dadurch gekennzeichnet, dass** die Umfangsrippe (42) sowohl den Bereich umfasst, dessen Neigung (α) sich unter der Hauptlast am meisten ändert, als auch den Bereich umfasst, dessen Neigung (α) sich unter der kleineren Last (44) am meisten gegenüber seinem Ausgangszustand ändert.

8. Maschinengehäuse nach einem der Ansprüche 6 oder 7, **dadurch gekennzeichnet, dass** das Lagergehäuse (14) ein Lagerdeckel an einem Kegelrad-Differenzialgetriebe ist.

## Claims

1. The invention relates to a machine housing comprising a bearing housing (1, 14), the bearing seat (2, 15) of which is connected to a housing wall of the machine housing via a bearing house wall (3, 16) provided with ribs (7, 8, 42, 43), and which is subjected to axially and radially directed forces (10, 11), **characterized in that** the bearing housing wall (3, 16) features at least one ring-shaped circumferential rib (7, 42) at least partly encompassing the bearing seat (2, 15) in an area (9, 21), the inclination (α) of which under main load (10, 11) occurring during operation would change the most in the absence of the circumferential rib (7,42) compared to its initial state, and in an area, which is diametrically opposed to the rotation axis (4) of the area (9, 21) with maximum change of inclination (α) and is near or adjacent to a bearing collar (5, 17), which surrounds the bearing seat (2, 15), and that there are a number of further ribs (18) running transversally to the circumferential rib (7, 42).

2. Machine housing according to claim 1, **characterized in that** the circumferential rib (7, 42) or its sections (45) are **characterized by** a largely elliptical course.

3. Machine housing according to claim 2, **characterized in that** the circumferential rib (7, 42) consists of a multitude of sections (45) which run straight between the transversally arranged ribs (8, 43).

4. Machine housing according to one of the preceding claims, **characterized in that** the dishshaped bearing housing wall is loaded by a radially directed main load (11), with the longitudinal section of the unloaded wall in the area (21) of the axial and radial main load (11) having a more pronounced curvature than in the area (22) which is diametrically opposed to the bearing axis (4).

5. Machine housing according to claim 4, **characterized in that** the circumferential rib (42) extends to the outer limit of a section (26) of the bearing housing wall (16) which largely runs parallel to the bearing plane (23).

6. Machine housing according to one of the preceding claims, **characterized in that** the bearing housing (14) is a bearing cover bolted to the machine housing, with the transversal ribs (43) being connected to bolts (19).

7. Machine housing according to one of the preceding claims, with the bearing housing (14), time-staggered with regard to the radial main load (11), being subjected to a lesser radial load (44), which together with the main load encloses an angle (γ), **characterized in that** the circumferential rib (42) encompasses the area the inclination (α) of which changes the most under the main load and also the area the inclination (α) of which changes the most under the lesser load (44) compared to its initial state.

8. Machine housing according to one of the claims 6 or 7, **characterized in that** the bearing housing (14) is a bearing cover on a bevel-gear differential.

## Revendications

1. Carter de moteur avec un logement de palier (1, 14), dont le siège (2, 15) est relié à une paroi du carter du moteur par l'intermédiaire d'une paroi de logement du palier (3, 16) pourvue de nervures (7, 8, 42, 43) et sollicité par des forces axiales et radiales (10, 11), **caractérisé en ce que** la paroi du logement de palier (3, 16) comprend au moins une nervure circulaire (7, 42) annulaire entourant au moins partiellement le siège du palier (2, 15) dans une zone (9, 21) dont l'inclinaison (α) par rapport à son état initial changerait le plus dans la nervure circulaire (7, 42) sous l'action d'une sollicitation principale (10, 11) qui apparaît pendant le fonctionnement, et qui se trouve dans une zone ou à proximité d'une zone diamétralement opposée à la zone (9, 21) par rapport à l'axe de rotation (4) avec la plus grande modification de l'inclinaison (α), à proximité d'un collet de palier (5, 17) qui entoure le siège du palier (2, 15), et **en ce que** plusieurs autres nervures (18) sont perpendiculaires à la nervure circulaire (7, 42).

2. Carter de moteur selon la revendication 1, **caractérisé en ce que** la nervure circulaire (7, 42) respectivement son tronçon (45) est sensiblement elliptique.

3. Carter de moteur selon la revendication 2, **caractérisé en ce que** la nervure circulaire (7, 42) est constituée d'une pluralité de tronçons (45) qui sont droits entre les nervures perpendiculaires (8, 43).

4. Carter de moteur selon l'une des revendications précédentes, **caractérisé en ce que** la paroi du logement de palier (16) est sollicitée par une charge principale radiale (11) et présente une forme de coque, la paroi du logement de palier étant, sans sollicitation dans la zone (21) de la charge principale axiale et radiale (11), plus fortement incurvée que dans la zone (22) diamétralement opposée par rapport à l'axe du palier (4).

5. Carter de moteur selon la revendication 4, **caractérisé en ce que** la nervure circulaire (42) s'étend jusqu'à la limite externe d'un tronçon (26) de la paroi du logement de palier (16) qui est parallèle au plan du palier (23).

6. Carter de moteur selon l'une des revendications précédentes, **caractérisé en ce que** le logement de palier (14) est un couvercle de palier vissé sur le carter de moteur, les nervures perpendiculaires (43) étant reliées à des pions taraudés (19).

7. Carter de moteur selon l'une des revendications précédentes, dans lequel le logement de palier (14) est sollicité, de manière décalée dans le temps par rapport à la charge principale (11), par une charge radiale (44) plus faible qui forme un angle (γ) avec la charge principale (11), **caractérisé en ce que** la nervure circulaire (42) comprend la zone dont l'inclinaison (α) change le plus sous l'action de la charge principale ainsi que la zone dont l'inclinaison (α) change le plus par rapport à son état initial sous l'action de la charge (44) plus faible.

8. Carter de moteur selon l'une des revendications 6 ou 7, **caractérisé en ce que** le logement de palier (14) est un couvercle de palier sur une transmission différentielle à roues coniques.
